Europäisches Patentamt

European Patent Office

Office européen des brevets

(11) Publication number: **0 319 140 B1**

# EUROPEAN PATENT SPECIFICATION

(45) Date of publication of patent specification: **03.03.93**　(51) Int. Cl.5: **G10L 5/06**

(21) Application number: **88310172.7**

(22) Date of filing: **28.10.88**

(54) **Speech recognition.**

(30) Priority: **04.12.87 JP 306091/87**

(43) Date of publication of application:
**07.06.89 Bulletin 89/23**

(45) Publication of the grant of the patent:
**03.03.93 Bulletin 93/09**

(84) Designated Contracting States:
**DE FR GB**

(56) References cited:
**EP-A- 0 181 167
EP-A- 0 266 423**

**ICASSP'84 - PROCEEDINGS OF THE IEEE IN-
TERNATIONAL CONFERENCE ON ACOUS-
TICS, SPEECH, AND SIGNAL PROCESSING,
San Diego, California, 19th-21st March 1984,
vol. 1, pages 9.3.1.-9.3.4, IEEE, New York, US;
Y. MATSUDA et al.: "A method for recogniz-
ing japanese monosyllables by using inter-
mediate cumulative distance"**

(73) Proprietor: **International Business Machines
Corporation
Old Orchard Road
Armonk, N.Y. 10504(US)**

(72) Inventor: **Sugawara, Kazuhide
1-39-11-307 Heiwadai
Herima-ku Tokyo-to(JP)**

(74) Representative: **Killgren, Neil Arthur
IBM United Kingdom Limited Intellectual
Property Department Hursley Park
Winchester Hampshire SO21 2JN (GB)**

EP 0 319 140 B1

## Description

The present invention relates to speech recognition methods and apparatus intended to be capable of stable preliminary selection of candidate words with high speed and high accuracy.

In speech recognition based upon Markov models, a pre-processing phase is generally carried out, in which the speech input is analysed over repeated constant short time intervals (for example, of about 12 msec duration), called "frames" hereinafter, generating a label per frame and hence a label string corresponding to the speech input. Thereafter, a preliminary selection phase adapted to the system is undertaken, the Polling Fast Match method using one-state Markov models (see Japanese Patent Application No. 61-58464 or U.S. Patent No. 4 718 094) being well known for this purpose. In this method, from a prior determination of the probability of each label in the label alphabet (a label set) occurring at an arbitrary frame of a word included in a vocabulary - its producing probability -, the probability of each word in the vocabulary corresponding to the generated label string representing the unknown speech input is accumulated, label by label, and, from these probabilities, candidate words from the vocabulary are selected on the basis of the accumulated value for each word. These selected candidate words are then finely matched in a final phase.

Since this Polling Fast Match method, however, utilises no time information, a word having an end portion similar to the head portion of a word in the input can be erroneously judged as a/the candidate, resulting in degradation of recognition accuracy.

Other prior art is disclosed in papers entitled "Speaker Independent Isolated Word Recognition Using Label Histograms", by O Watanuki and T Kaneko, Proceedings of ICASSP '86, pp 2679 - 2682, April 1986 and "Experiments in Isolated Digit Recognition with a Cochlear Model", by Eric P Loeb and Richard F Lyon, Proceedings of ICASSP '87, pp 1131 - 1134, April 1987.

In the first of these prior techniques, the producing probability of each label in the label alphabets in an arbitrary frame of the block is previously determined for each block of each word, divided into N blocks, included in the vocabulary and the label string of the unknown speech input is divided into N sections. The probability for each word is accumulated as a function of each label of the label string and of the block including the label, and the word having the maximum accumulated value is determined to be the "recognised" word. In the latter of these prior techniques, similar processing is undertaken, but with $N = 2$. In these techniques, the division of the speech input into 2 or more sections can not be performed until all the speech has been input, making it difficult to perform "realtime" processing. Furthermore, their execution is impaired by fluctuations in timing since there is no provision for any smoothing process in the relative timing of the blocks.

It is to be noted that the two techniques described above related to direct speech recognition, and do not involve a preliminary phase of selection of candidate words.

EP-A-0266423 describes a voice pattern matching method in which a fixed length beginning portion of an input word is used to generate a list of candidate words.

In view of the above, the present invention seeks to provide a speech recognition configuration capable of high speed preliminary selection of the candidate words taking time information into account, with a high accuracy, without having to wait for the completion of the speech input.

The present invention provides a method of automated speech recognition wherein an unknown speech input is divided into words on merit, the words are divided into fixed length leading portions and consequentially variable length remaining portions, both portions being further subdivided into fixed length plural frames, each frame being matched against a fixed set of features, determined to correspond to one of the same and tagged with a label representing that feature, the fixed length label string generated from the leading portion of a word being used to aggregate a probability value for the string by accessing individual probability values of occurrence from a leading portion table of labels against first portions of known words and the remaining portion label string being correspondingly processed against a separate remaining portion table, the two sets of aggregate values being compounded by word portion pairs and the words corresponding to the highest compounded values being selected as candidate words for further processing to produce a result, whereby execution of the first portion processing of a word can be undertaken while the remaining portion of the word is being received and the selection of candidates includes a measure of the time of occurrence of a determined feature in a word.

Apparatus for performing the method is also provided.

It is thought that such an arrangement is relatively invulnerable to instability due to fluctuations in the timing of the utterance of the speech input.

In such a configuration, the producing probability of each label in the label alphabet in an arbitrary frame in the fixed length first portion and the variable length remaining portion of each word included in the vocabulary is determined in advance. While an unknown speech input is being received, during the fixed first portion, in response to the labels of the label string, the corresponding label producing probabilities relative to the first portion are accumulated, and after that the corresponding label producing probabilities relative to the second portion are accumulated. Thus the processing may be performed without waiting for the input completion of the unknown speech.

Furthermore, at the time of determining the label producing probabilities for the initial fixed length portion and the remaining variable length portion of word based upon the training speech input, statistical information is obtained by using weights for smoothing variation in timing to absorb fluctuations in the timing of utterance.

The present invention will be described further by way of example with reference to an embodiment thereof as illustrated in the accompanying drawings in which:-

Figure 1 shows a block diagram representing one embodiment of the invention;

Figure 2, a timing chart explaining the word cut-out circuit of Figure 1;

Figure 3, a drawing representing a score table generated by the score table generation portion of Figure 1;

Figure 4, a flow chart explaining the operation of the score table generation portion;

Figures 5 and 6, drawings respectively explaining the weights of the count and the smoothing matrix between the labels in the score table generation portion;

Figure 7A, a score table generated based upon the utterance "Yen" without performing the smoothing between the labels and the division into two sections;

Figure 7B, the similar score table with performing only smoothing between the labels;

Figures 7C and 7D, score tables for the first half portion and the second half portion generated based upon the utterance "Yen" in the embodiment of Figure 1; and

Figure 8, a flow chart explaining the operation of the likelihood calculation portion of Figure 1.

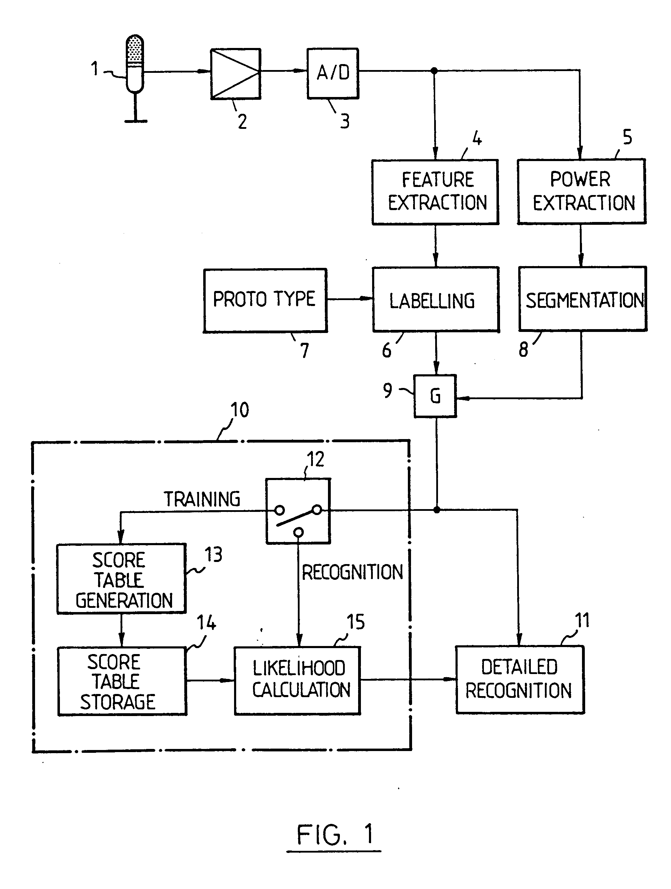

As illustrated in Figure 1, an input speech data is supplied to an analog/digital (A/D) converter 3 through a microphone 1 and an amplifier 2 to obtain digital data. The digitised speech data is supplied to a feature extraction block 4 and a power extraction block 5 to extract a feature value and a power value for the speech data. The feature value is fed to a labelling block 6 and converted into a label with reference to a label prototype dictionary 7. The label prototypes in the dictionary 7 are made by clustering and there are 32 of them in this example.

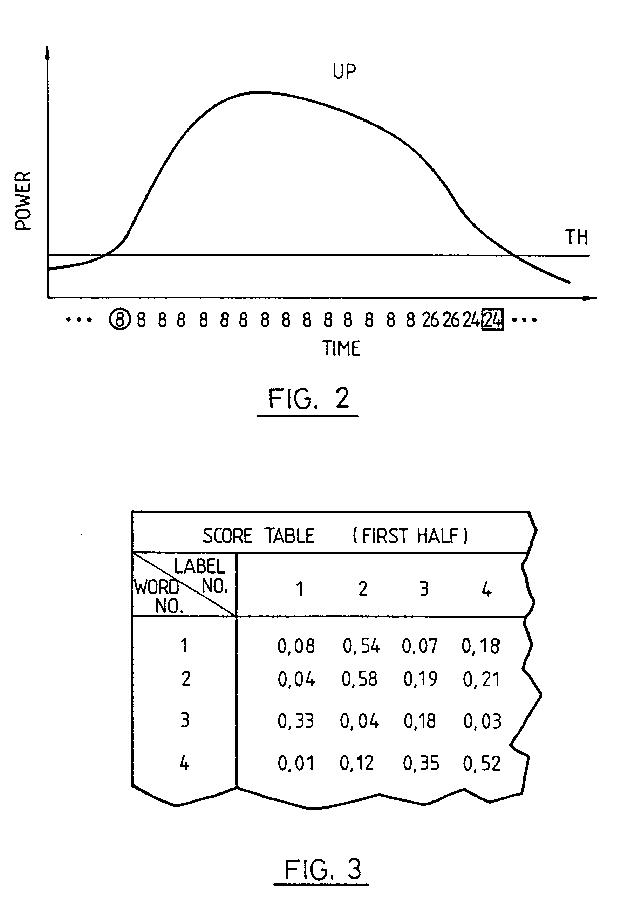

The power value from the power extraction block 5 is fed to a word segmentation block 8 where frames corresponding to the leading edge and the trailing edge of the word are detected based upon the power data. In this detection, as shown in Figure 2, for example, frames immediately after and before the time point when the power data UP of the utterance exceeds and falls below a threshold value TH are determined as the leading edge frame (surrounded with a circle) and the trailing edge frame (surrounded with a square), respectively. Figure 2 shows an example of the utterance "en". A numerical train indicates a string of label numbers corresponding to the utterance "en".

The word segmentation block 8 supplies a gate signal to a gate circuit 9 in response to the frame detection of the head and end portions of the word, and supplies the label string corresponding to the utterance to the next stage.

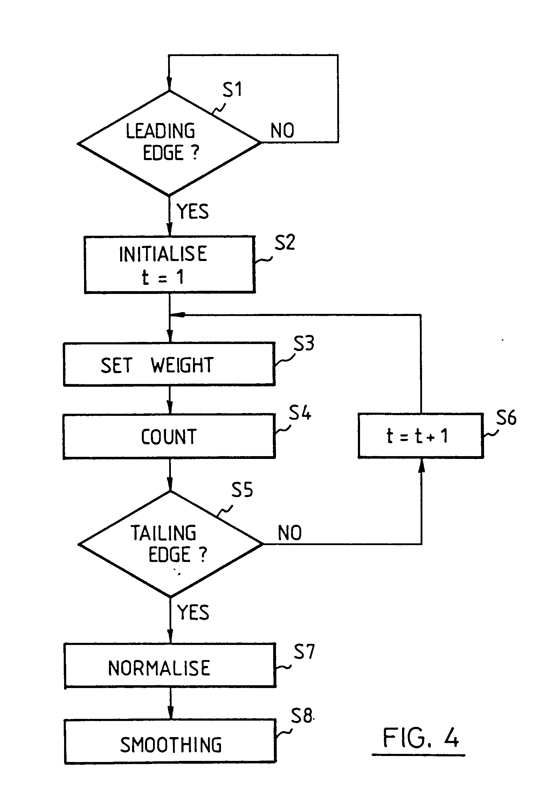

The label string is fed to a preliminary selection block 10 and a detailed recognition block 11. The preliminary selection block 10 comprises a switching circuit 12, a score table generation block 13, a score table storage 14 and a likelihood calculation block 15. The switching circuit 12 supplies the label string to the score table generation block 13 and the likelihood calculation block 15 during training and recognition, respectively. The score table generation block 13 generates for each word a score table T1 for the first half portion of the word as shown in Figure 3 and a similar score table T2 (not shown) for the second half portion of the word and stores them in the score table storage 14. The details of the generation of the score tables T1 and T2 will be explained later, referring to Figure 4. As is clearly understandable from the example of Figure 3, the score table T1 represents the producing probability of each label for the first half portion of each word. For example, "0.08" surrounded with a circle indicates that the producing probability of the label 1 in an arbitrary frame in the first half portion of the word 1 is 0.08. The first half portion of the word is a fixed length portion having 15 frames and the second half portion is the remaining portion.

The likelihood calculation block 15 determines the similarity degree of the inputted speech for each of the words on the basis of the score tables T1 and T2 of the respective words in the score table memory storage 14, discriminates the most similar M candidate words and supplies the discriminated data to the detailed recognition block 11. The detailed recognition block 11 aligns the label string of the inputted speech with the Markov model of each of the M candidate words in accordance with, for instance, the Viterbi algorithm, and outputs the most similar candidate word as a recognition result.

Next, the score table generation block 13 in Figure 1 will be explained.

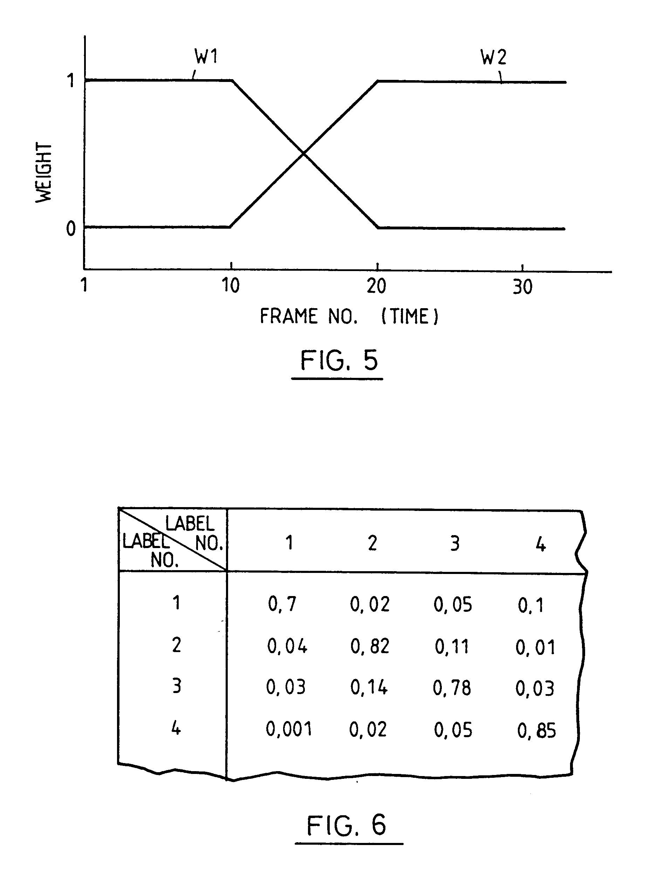

The score table generation block 13 generates the score tables T1 and T2 by performing the procedure as shown in Figure 4. This procedure is carried out for each word in the vocabulary. The number of the word is represented by k hereinafter. Referring to Figure 4, step S1 prepares for detection of the head of a word. An initialisation is performed for all of the label number i (i = 0 - 31) so as to set the COUNT1 (k, i) and the COUNT2 (k, i) for the first and second half portions of the word to zero and the frame number t (t = 1, 2, ...) to 1, respectively, in response to the word head detection (step S2). Subsequently, in step S3 weights W1 and W2 for the first and second half portions of the word are respectively set in accordance with a frame number t. These weights W1 and W2 are set as shown in the [TABLE] and Figure 5. As is understandable from the table and Figure 5, the labels of the frames, $10 < t \le 20$, are totalled to generate the score tables T1 and T2 for the first and second half portions taking into account the utterance fluctuation in the time direction. Moreover, this totalling is also smoothed by using the weight which changes smoothly with the frame number.

[Table]  Weight Distribution According to Frame Number

| $t \le 10$ | $10 < t \le 20$ | $20 < t$ |
|---|---|---|
| Totalling for score table T1 | Totalling for both score tables T1 and T2 | Totalling for score table T2 |
| W1 = 1 | W1 = (20 - t)/10 | W1 = 0 |
| W2 = 0 | W2 = (t - 10)/10 | W2 = 1 |

In step S4, the COUNT1 (k, t) and the COUNT2 (k, t) corresponding to the t-th label t are respectively increased by weights W1 and W2. Subsequently after increasing the frame number t by 1 in step S6 if this frame is not the end of word, the processing returns to step S3. If it is the end of word the processing proceeds to step S7 (step S5). In step S7, the count is normalised according to the following formula and the values of the score tables T1 and T2 for all of the label number i, that is, the producing probability P1 (k, i) and P2 (k, i) are determined by

$$P1 \ (k, \ i) \ = \ COUNT1 \ (k, \ i) / \sum_{j=1}^{N} COUNT1 \ (k, \ j)$$

$$P2 \ (k, \ i) \ = \ COUNT2 \ (k, \ i) / \sum_{j=1}^{N} COUNT2 \ (k, \ j)$$

where N represents a total number of frames of the utterance.

In step S8 the smoothing between the labels is performed based upon the following formula. According to this processing, relatively stable label producing probability may be obtained even without sufficient training data, even under the condition where many kinds of labels have not occurred, using those P1 and P2 actually accumulated, in terms of

4

$$P1'\ (k,\ j)\ =\ \Sigma P1\ (k,\ i)C(i,\ j)$$
$$i$$

$$P2'\ (k,\ j)\ =\ \Sigma P2\ (k,\ i)C(i,\ j)$$
$$i$$

where C (i, j) is a smoothing matrix satisfying

$$C\ (i,\ j)\ \geq\ 0\ and\ \Sigma\ C\ (i,\ j)\ =\ 1.$$
$$j$$

The smoothing matrix is based upon the distance between the labels and is shown, for example, by Figure 6.

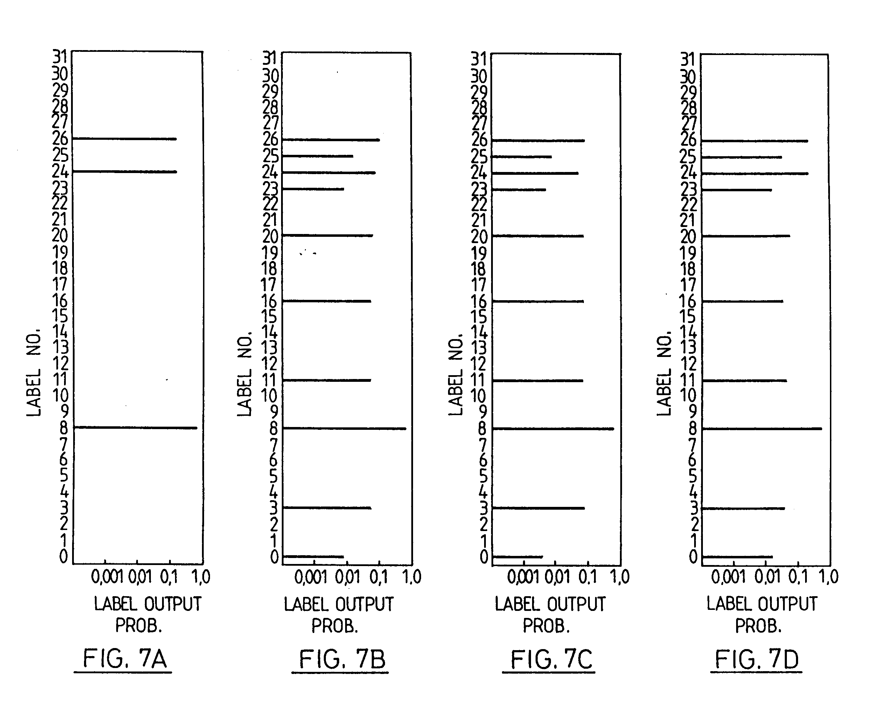

Figures 7C and 7D represent the producing probability of the score tables T1 and T2 for the example of the utterance "en" according to this embodiment. On the other hand, Figure 7A represents a score table of the whole words, and Figure 7B is that obtained by performing the smoothing processing between the labels for that of Figure 7A. It is apparent from these drawings that the number of labels with the probability zero is decreased by the smoothing between the labels, making it possible to absorb the change in speech quality of the speaker. It is also understandable from a comparison of the score tables T1 and T2 that the producing probability of the third and eighth labels corresponding to /e/ is relatively large and the producing probability of the 23rd to the 26th labels corresponding to /N/ is small. As described above, the score tables T1 and T2 include time information.

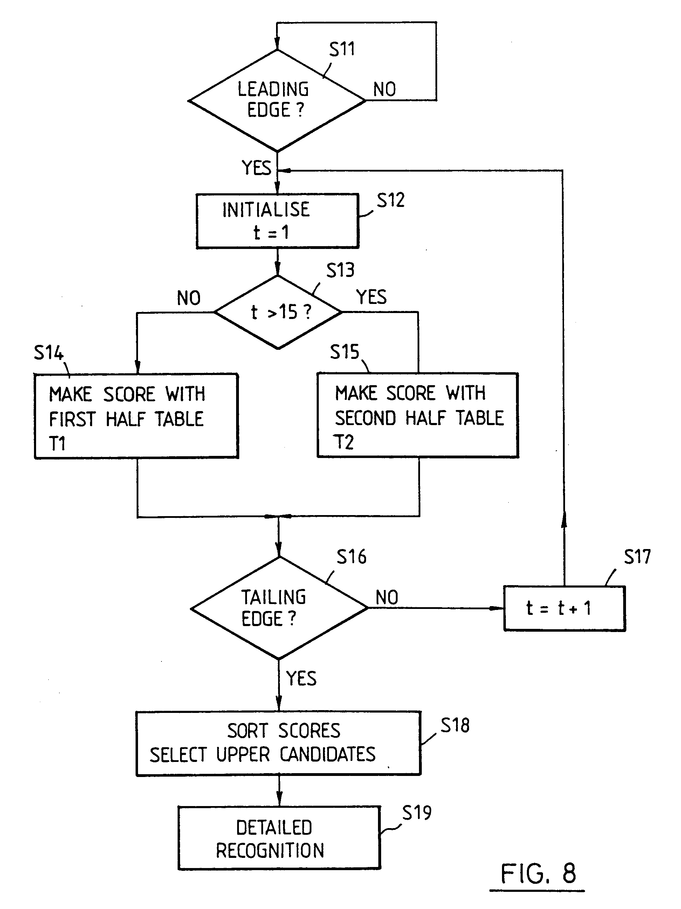

Next, the likelihood calculation block 15 in Figure 1 will be described with reference to Figure 8. The calculation in this block 15 is performed by using the score table T1 of the first half portion and the score table T2 of the second half portion for the 15 frames of the first half and the remaining second half portion of the inputted speech respectively.

In Figure 8, step S11 prepares for detection of the head of word. In response to the detection of the head of word an initialisation is carried out so as to set the score s (k) of the word k to zero and the frame number t to 1 (step S12), respectively. In step S13, it is judged whether the frame number t exceeds the number 15 corresponding to the boundary between the first and second half portions. If this is not the case the processing proceeds to step S14. The processing proceeds to step S15 if this is the case. In step S14, the producing probability P1' (k, t) corresponding to the t-th label t is added to the score S (k) by using the score table T1 of the first half portion for each word. While in step S15, by using the score table T2 of the second half portion P2' (k, t) is added to the score S (k).

Thereafter, step S16 judges whether the present frame is the end of word or not. It returns to step S12 after increasing the frame number t by one in step S17 if the frame is not the end of word. On the other hand, if the frame is the end of word it proceeds to step S18 where the scores S (k) are arranged in the order of magnitude, the largest M candidate words are selected and transferred to the fine recognition portion 11 (step S19).

According to this embodiment, the processing may be performed in synchronism with frames without waiting for the completion of the utterance, since the likelihood calculation for the preliminary selection is performed by dividing the fixed length first half portion and the remaining second half portion and using the respective score tables for those portions (the conventional one equally divides the utterance and therefore has to wait for the completion of the whole utterance). Furthermore, the smoothing processing is performed in preparing the score tables for the first and second half portions, thereby realising the stable preliminary selection even under utterance fluctuation in the time direction. Moreover, the smoothing between the labels makes it possible to generate better score tables even without sufficient training data.

It is to be noted here that according to this embodiment the preliminary selection block 10, the detailed recognition block 11, the word segmentation block 8 and the gate circuit 9 are realised by a software with a personal computer and the feature extraction block 4, the labelling block 6 and the power extraction block 5 are formed with a signal processing board equipped in the personal computer. Various kinds of modifications may be of course possible to construct using various kinds of hardware.

As described above, according to the present invention, the fixed length first half portion and the remaining second half portion of the utterance are estimated by the individual score tables, thereby realising the use of time information and the frame synchronised processing. Moreover, since the smoothing in the time direction is performed in preparing the score tables, stable preliminary selection of candidate words under utterance fluctuation in the time direction may be realised.

**Claims**

1. A method of automated speech recognition wherein an unknown speech input is divided into words on merit, the words are divided into fixed length leading portions and consequentially variable length remaining portions, both portions being further subdivided into fixed length plural frames, each frame being matched against a fixed set of features, determined to correspond to one of the same and tagged with a label representing that feature, the fixed length label string generated from the leading portion of a word being used to aggregate a probability value for the string by accessing individual probability values of occurrence from a leading portion table of labels against first portions of known words and the remaining portion label string being correspondingly processed against a separate remaining portion table, the two sets of aggregate values being compounded by word portion pairs and the words corresponding to the highest compounded values being selected as candidate words for further processing to produce a result, whereby execution of the first portion processing of a word can be undertaken while the remaining portion of the word is being received and the selection of candidates includes a measure of the time of occurrence of a determined feature in a word.

2. A method as claimed in claim 1, wherein the tables are established in a learning phase in which known words are input, divided, framed, featurised and labelled, the probability values for the labelled features being derived by dividing the number of occurrences of each label in each portion of each word by the number of occurrences of that label in that portion of all the words.

3. A method as claimed in claim 1 or claim 2, wherein the probability values in the leading portion table are biased against features occurring late in the fixed length leading portion of each known word and include a bias toward features occurring in the initial frames of the remaining portion of each word.

4. A method as claimed in any preceding claim, wherein the probability values in the remaining portion table are biased toward features occurring late in the fixed length leading portion of each known word and biased away from features occurring in the initial frames of the remaining portion of each word.

5. A method as claimed in claim 3 or claim 4, wherein the biasing is achieved by aggregating a contribution from each label, as it is generated in the learning phase, into both probabilities for the current word, its contribution being determined by a leading portion weighting factor and a remaining portion weighting factor, each being a function of the position of the frame giving rise to the label in the sequence of frames, respectively decreasing to zero and increasing from zero in a section of the sequence overlapping the break point between the two portions of the sequence.

6. A method as claimed in any of claims 2 to 5, wherein the tables are smoothed by mathematically extrapolating probability values for labels not actually generated in the learning phase.

7. Speech recognition apparatus for performing the method as claimed in claim 1, the apparatus including:

   a first memory means for storing the leading portion probability value table for each word in the vocabulary of words the apparatus can recognise;

   a second memory means for storing the remaining portion probability value table for each word in the vocabulary;

   means for framing a speech input and for generating a label for each speech frame indentifying one of set of known speech features present for each frame;

   means for determining, from the input, the starts and finishes of the words and, upon the generation of a label for a frame, whether the label belongs to the leading or remaining portion of that word;

   means responsive thereto for accessing the appropriate memory means to obtain the probability

EP 0 319 140 B1

value for that label in relation to each word of the vocabulary

means for accumulating the probabilities outputted for each word;

means for selecting at least one candidate word in terms of the accumulated probabilities; and

means for performing detailed recognition for the or each of the selected candidate words.

**8.** Apparatus as claimed in claim 7, capable of performing the learning phase of claim 2, and including:

means for receiving serially the words of the vocabulary in a learning phase and applying the same to the framing means and the determining means;

means for adding to current accumulation pairs for each word, upon the generation of a label in the learning phase, a respective first or second weight to aggregate the first and second statistical values of the label concerned, said first and second weights being functions of a lapse time in terms of a number of frames from a front edge of the word to the generation of the label concerned;

means for normalising the first and second statistical values of each label in a label set for each word to produce probability values;

and means for the probability values into the respective tables in the respective memory means.

**9.** Apparatus as claimed in claim 8, wherein said first weight becomes gradually smaller and said second weight becomes gradually larger as label generation time point is later, at least as long as the label generation time point is around the boundary between the leading and remaining portions of a word.

**10.** Apparatus as claimed in claim 9, including means for smoothing the table distribution by mathematically extrapolating probability values for labels not actually generated in the learning phase.

**Patentansprüche**

**1.** Verfahren zur automatischen Spracherkennung, bei welchem eine unbekannte Spracheingabe in Wörter mit Bedeutung geteilt wird, wobei die Wörter in Anfangsteile mit fester Länge und demgemäß in übrigbleibende Teile mit variabler Länge geteilt werden und beide Teile weiter in Mehrzahlrahmen mit fester Länge unterteilt werden, wobei jeder Rahmen mit einem festen Satz von Merkmalen übereingestimmt wird, bestimmt wird, ob er mit einem derselben übereinstimmt und mit einem Kennzeichen versehen wird, das dieses Merkmal darstellt, und die Kennzeichenkette mit fester Länge, die aus dem Anfangsteil eines Wortes gebildet wird, dazu verwendet wird, daß durch Zugreifen auf bestimmte individuelle Wahrscheinlichkeitswerte für das Auftreten aus einer Anfangsteiltabelle mit Kennzeichen gegenüber Anfangsteilen bekannter Wörter ein Wahrscheinlichkeitswert für die Zeichenkette angesammelt wird und die Kennzeichenkette für die übrigbleibenden Teile entsprechend mit einer separaten Tabelle für die übrigbleibenden Teile verarbeitet wird, wobei die beiden Sätze angesammelter Werte durch Wortteilpaare verbunden sind und die Wörter mit den höchsten damit verbundenen Werten als Kandidatenwörter zur weiteren Verarbeitung ausgewählt werden, um ein Ergebnis zu erzeugen, wodurch das Ausführen der Verarbeitung des ersten Teils eines Wortes durchgeführt werden kann, während der übrige Teil des Wortes empfangen wird, und die Auswahl von Kandidaten ein Maß für die Zeit des Auftretens eines bestimmten Merkmales in einem Wort enthält.

**2.** Verfahren nach Anspruch 1, bei welchem die Tabellen in einer Lernphase erstellt werden, in welcher bekannte Wörter eingegeben, geteilt, gerahmt werden, Merkmale erkannt und mit Kennzeichen versehen werden, wobei die Wahrscheinlichkeitswerte der gekennzeichneten Merkmale durch Dividieren der Anzahl von Erscheinungen jedes Kennzeichens in jedem Teil jedes Wortes durch die Anzahl von Erscheinungen dieses Kennzeichens in diesem Teil aller Wörter abgeleitet wird.

**3.** Verfahren nach Anspruch 1 oder 2, bei welchem die Wahrscheinlichkeitswerte in der Anfangsteiltabelle auf Merkmale gerichtet ist, die in dem Anfangsteil mit fester Länge jedes bekannten Wortes spät auftreten, und auf Merkmale gerichtet ist, die in den anfänglichen Rahmen des übrigbleibenden Teils

7

jedes Wortes auftreten.

4. Verfahren nach einem der vorigen Ansprüche, bei welchem die Wahrscheinlichkeitswerte in der Tabelle für die übrigbleibenden Teile auf Merkmale gerichtet sind, die im Anfangsteil mit fester Länge jedes bekannten Wortes spät auftreten, und von Merkmalen abgewandt sind, die in den anfänglichen Rahmen des übrigbleibenden Teils jedes Wortes auftreten.

5. Verfahren nach einem der Ansprüche 3 oder 4, bei welchem das Ausrichten durch Ansammeln von Beiträgen jedes Kennzeichens, wenn es in der Lernphase erzeugt wird, zu beiden Wahrscheinlichkeiten für das momentane Wort erzielt wird, wobei dessen Beitrag von einem Gewichtungsfaktor für den Anfangsteil und einem Gewichtungsfaktor für den übrigbleibenden Teil bestimmt wird, von denen jeder eine Funktion der Position des Rahmens ist, der in der Rahmensequenz das Kennzeichen trägt, wobei die Gewichtungsfaktoren in einem Abschnitt der Sequenz, der den Teilungspunkt zwischen den zwei Teilabschnitten der Sequenz überlappt, auf Null abnimmt und von Null ansteigt.

6. Verfahren nach einem der Ansprüche 2 bis 5, bei welchem die Tabellen durch mathematisch extrapolierende Wahrscheinlichkeitswerte für Kennzeichen geglättet werden, die nicht wirklich in der Lernphase erzeugt werden.

7. Spracherkennungseinrichtung zum Ausführen des Verfahrens nach Anspruch 1, die enthält:

ein erstes Speichermittel zum Speichern der Anfangsteilwahrscheinlichkeitswertetabelle jedes Wortes in dem Vokabular von Wörtern, welche die Einrichtung erkennen kann;

ein zweites Speichermittel zum Speichern der Tabelle für die Wahrscheinlichkeitswerte der übrigbleibenden Teile jedes Wortes des Vokabulars;

Mittel zum Rahmen einer Spracheingabe und zum Erzeugen eines Kennzeichens für jeden Sprachrahmen, das eines aus einem Satz in jedem Rahmen vorhandener bekannter Sprachmerkmale identifiziert;

Mittel zum Bestimmen der Anfänge und der Enden der Wörter aus der Eingabe und ob ein Kennzeichen zu dem Anfangsteil oder dem übrigbleibenden Teil des Wortes gehört, nach der Herstellung des Kennzeichens für einen Rahmen;

Mittel, die darauf ansprechen, um auf geeignete Speichermittel zum Erlangen des Wahrscheinlichkeitswertes für das Kennzeichen in Verbindung mit jedem Wort des Vokabulars zuzugreifen;

Mittel zum Ansammeln der Wahrscheinlichkeiten, die für jedes Wort ausgegeben werden;

Mittel zum Auswählen zumindest eines Kandidatenwortes bezüglich der angesammelten Wahrscheinlichkeiten und

Mittel zum Ausführen detaillierter Erkennung des oder jedes der ausgewählten Kandidatenwörter.

8. Einrichtung nach Anspruch 7, das zum Ausführen der Lernphase nach Anspruch 2 geeignet ist und aufweist:

Mittel zum seriellen Empfangen der Wörter des Vokabulars in einer Lernphase und Anwenden derselben an die Rahmenmittel und die Bestimmungsmittel;

Mittel zum Addieren einer entsprechenden ersten oder zweiten Gewichtung nach der Herstellung eines Kennzeichens in der Lernphase zu gegenwärtigen Ansammlungspaaren für jedes Wort, um den ersten und zweiten statistischen Wert des betreffenden Kennzeichens anzusammeln, wobei die ersten und zweiten Gewichtungen hinsichtlich der Anzahl von Rahmen von einem vorderen Ende des Wortes bis zur Herstellung des betreffenden Kennzeichens Funktionen einer Zeitspanne sind;

Mittel zum Normieren des ersten und zweiten statistischen Wertes jedes Kennzeichens in einem Kennzeichensatz für jedes Wort, um Wahrscheinlichkeitswerte zu erzeugen, und

Mittel für die Wahrscheinlichkeitswerte in den entsprechenden Tabellen der entsprechenden Speichermittel.

9. Einrichtung nach Anspruch 8, bei welcher die erste Gewichtung graduell kleiner und die zweite Gewichtung graduell größer wird, wenn der Punkt zur Herstellung des Kennzeichens später folgt, zumindest solange der Punkt zur Herstellung des Kennzeichens in den Grenzen zwischen dem Anfangsteil und dem übrigbleibenden Teil eines Wortes liegt.

10. Einrichtung nach Anspruch 9, die Mittel zum Glätten der Tabellenverteilung durch mathematisch extrapolierende Wahrscheinlichkeitswerte für Kennzeichen enthält, die nicht wirklich in der Lernphase erzeugt wurden.

## Revendications

1. Procédé de reconnaissance automatisé de la parole dans lequel une entrée vocale inconnue est divisée en mots fonction des caractéristiques intrinsèques, dans lequel les mots sont divisés en parties d'entête de longueur fixe et ensuite en parties restantes de longueur variable, les deux parties étant de plus sous-divisées en de nombreuses trames de longueur fixe, chaque trame étant mise en correspondance par rapport à un ensemble fixe de caractéristiques, déterminée correspondre à une de celles-ci et étiquetée avec une étiquette représentant cette caractéristique, la chaîne d'étiquettes de longueur fixe produite à partir de la partie d'entête d'un mot étant utilisée pour totaliser une valeur de probabilité pour la chaîne en accédant aux valeurs de probabilité individuelles d'arrivée à partir d'une table de parties d'entête d'étiquette par rapport aux premières parties de mot connues et la chaîne d'étiquettes des parties restantes étant traitée de manière correspondante par rapport à une table distincte de parties restantes, les deux ensembles des valeurs totalisées étant constituées de paires de parties de mot et les mots correspondant aux valeurs composées les plus élevées étant sélectionnés comme mots candidats pour traitement ultérieur afin de produire un résultat, si bien que l'exécution du traitement de la première partie d'un mot peut être effectuée alors que la partie restante du mot est en cours de réception et la sélection des candidats comporte une mesure du temps d'arrivée d'une caractéristique déterminée dans un mot.

2. Procédé selon la revendication 1, dans lequel les tables sont établies dans une phase d'apprentissage pendant laquelle des mots connus sont entrés, divisés, mis en trame, caractérisés et étiquetés, les valeurs de probabilité pour les caractéristiques étiquetées étant obtenues en divisant les nombres des arrivées de chaque étiquette dans chaque partie de chaque mot par le nombre d'arrivées de cette étiquette dans cette partie de tous les mots.

3. Procédé selon la revendication 1 ou la revendication 2, dans lequel les valeurs de probabilité dans la table des parties d'entête sont pré-comparées par rapport aux caractéristiques arrivant en dernier dans la partie d'entête de longueur fixe de chaque mot connu et comportent une comparaison directe des caractéristiques arrivant dans les trames initiales de la partie restante de chaque mot.

4. Procédé selon l'une quelconque des revendications précédentes, dans lequel les valeurs de probabilité dans la table des parties restantes sont comparées directement aux caractéristiques arrivant en dernier dans la partie d'entête de longueur fixe de chaque mot connu et comparées à l'opposé des caractéristiques arrivant dans les trames initiales de la partie restante de chaque mot.

5. Procédé selon la revendication 3 ou la revendication 4, dans lequel la comparaison est réalisée en totalisant une contribution à partir de chaque étiquette, telle qu'elle est produite dans la phase d'apprentissage en deux probabilités pour le mot courant, sa contribution étant déterminée par un facteur de pondération de partie d'entête et par un facteur de pondération de partie restante, chacun étant fonction de la position de la trame donnant naissance à l'étiquette dans la séquence des trames, diminuant respectivement à zéro et augmentant de zéro dans une section de la séquence recouvrant le point de rupture entre les deux parties de la séquence.

6. Procédé selon l'une quelconque des revendications 2 à 5, dans lequel les tables sont lissées en extrapolant mathématiquement les valeurs de probabilité pour les étiquettes qui ne sont pas actuellement produites dans la phase d'apprentissage.

7.  Appareil de reconnaissance de la parole pour mettre en oeuvre le procédé comme revendiqué dans la revendication 1, l'appareil comportant :

    un premier moyen de mémoire pour mémoriser la table des valeurs de probabilité des parties d'entête pour chaque mot dans le vocabulaire des mots que l'appareil peut reconnaître ;

    un second moyen de mémoire pour mémoriser la table des valeurs de probabilité des parties restantes pour chaque mot dans le vocabulaire ;

    un moyen pour mettre en trame une entrée vocale et pour produire une étiquette pour chaque trame vocale identifiant une caractéristique d'un ensemble de caractéristiques de parole connue présente pour chaque trame ;

    un moyen pour déterminer, à partir de l'entrée, le début et la fin des mots et, sur la production d'une étiquette pour une trame, si l'étiquette appartient à la partie d'entête ou à la partie restante de ce mot ;

    un moyen sensible à celui-ci pour accéder au moyen de mémoire approprié pour obtenir la valeur de probabilité pour cette étiquette par rapport à chaque mot du vocabulaire ;

    un moyen pour accumuler les probabilités sorties pour chaque mot ;

    un moyen pour sélectionner au moins un mot candidat exprimé en probabilités accumulées, et

    un moyen pour effectuer la reconnaissance détaillée pour le mot ou chacun des mots candidats sélectionné(s).

8.  Appareil selon la revendication 7, pouvant effectuer la phase d'apprentissage de la revendication 2 et comportant :

    un moyen pour recevoir en série les mots du vocabulaire dans une phase d'apprentissage et appliquer ceux-ci au moyen de mise en trame et au moyen de détermination ;

    un moyen pour ajouter aux paires d'accumulation courantes pour chaque mot, sur la production d'une étiquette dans la phase d'apprentissage, un premier ou second poids respectif pour totaliser les première et seconde valeurs statistiques de l'étiquette concernée, lesdits premier et second poids étant fonction de l'écoulement du temps exprimé en fonction du nombre de trames à partir du bord avant du mot à la production de l'étiquette concernée ;

    un moyen pour normaliser les première et seconde valeurs statistiques de chaque étiquette dans un ensemble d'étiquettes pour chaque mot afin de produire les valeurs de probabilité, et

    un moyen pour mémoriser les valeurs de probabilités dans les tables respectives dans les moyens de mémoire respectifs.

9.  Appareil selon la revendication 8, dans lequel ledit premier poids devient progressivement plus faible et ledit second poids devient progressivement plus grand à mesure que l'instant de génération d'étiquette est de plus en plus tard, au moins tant que l'instant de génération d'étiquette est autour de la limite entre les parties d'entête et restante d'un mot.

10. Appareil selon la revendication 9, comportant un moyen pour lisser la distribution des tables en extrapolant de manière mathématique les valeurs de probabilité pour les étiquettes qui ne sont pas actuellement produites dans la phase d'apprentissage.

FIG. 1

UP

POWER

TH

$\cdots$ ⑧ 8 8 8 8 8 8 8 8 8 8 8 8 8 8 26 26 24 24 $\cdots$

TIME

## FIG. 2

| SCORE TABLE | (FIRST HALF) | | | |
|---|---|---|---|---|
| WORD NO. \ LABEL NO. | 1 | 2 | 3 | 4 |
| 1 | 0,08 | 0,54 | 0.07 | 0,18 |
| 2 | 0,04 | 0,58 | 0,19 | 0,21 |
| 3 | 0,33 | 0,04 | 0,18 | 0,03 |
| 4 | 0,01 | 0,12 | 0,35 | 0,52 |

## FIG. 3

FIG. 4

FIG. 5

| LABEL NO. / LABEL NO. | 1 | 2 | 3 | 4 |
|---|---|---|---|---|
| 1 | 0,7 | 0,02 | 0,05 | 0,1 |
| 2 | 0,04 | 0,82 | 0,11 | 0,01 |
| 3 | 0,03 | 0,14 | 0,78 | 0,03 |
| 4 | 0,001 | 0,02 | 0,05 | 0,85 |

FIG. 6

FIG. 7A

FIG. 7B

FIG. 7C

FIG. 7D

FIG. 8